# EUROPEAN PATENT APPLICATION

(11) **EP 3 822 823 A2**
(43) Date of publication of application: **19.05.2021**
(21) Application number: 21165060.1
(22) Date of filing: 25.03.2021
(51) Int. Cl.: G06F 16/51, G06F 16/535, G06F 16/583, G06F 16/29

(54) **METHOD AND APPARATUS FOR QUERYING HISTORICAL STREET VIEW, ELECTRONIC DEVICE, STORAGE MEDIUM AND COMPUTER PROGRAM PRODUCT**

(30) Priority: 11.09.2020 CN 202010955587
(71) Applicant: Beijing Baidu Netcom Science and Technology Co., Ltd., Beijing 100085 (CN)
(72) Inventor: BAI, Guocai, Beijing, Beijing 100085 (CN); LI, Hao, Beijing, Beijing 100085 (CN)
(74) Representative: Richly & Ritschel Patentanwälte PartG mbB

(57) **Abstract**

Embodiments of the present disclosure disclose a method and apparatus for querying a historical street view, an electronic device, a computer readable storage medium and a computer program product, relate to the technical fields of electronic maps, big data, and indexing. A specific embodiment of the method includes: receiving a historical street view query request, and determining a target location point based on the historical street view query request; determining a location point that is not more than a preset distance from the target location point and records a historical street view image as a first location point; determining a location point in the first location point as a second location point, the second location point having a recording orientation of a street view image consistent with a recording orientation of a street view image of the target location point; and returning the historical street view image recorded at the second location point. This embodiment may quickly and efficiently select a location point with the highest correlation to the target location point from all recorded location points, quickly respond to a user-initiated query request, and improve user experience.

## Description

### TECHNICAL FIELD

Embodiments of the present disclosure relate to the field of data processing technology, specifically to the technical fields of electronic maps, big data, and indexing, and more specifically to a method and apparatus for querying a historical street view, an electronic device, a computer readable storage medium and a computer program product.

### BACKGROUND

With the application of various new technologies, the surrounding environment is also changing rapidly. Panoramic time machine refers to the technology to view street view images of a scene in different time dimensions in the past, named for its ability to provide users with a time shuttle experience similar to a time machine, allowing the users in a certain scenario to experience rapid changes of a city/country in a historical street view image stream that changes over time.

### SUMMARY

Embodiments of the present disclosure propose a method and apparatus for querying a historical street view, an electronic device, a computer readable storage medium and a computer program product.

In a first aspect, an embodiment of the present disclosure provides a method for querying a historical street view, the method including: receiving a historical street view query request, and determining a target location point based on the historical street view query request; determining a location point that is not more than a preset distance from the target location point and records a historical street view image as a first location point; determining a location point in the first location point as a second location point, the second location point having a recording orientation of a street view image consistent with a recording orientation of a street view image of the target location point; and returning the historical street view image recorded at the second location point.

In a second aspect, an embodiment of the present disclosure provides an apparatus for querying a historical street view, the apparatus including: a query request receiving and target location point determination unit, configured to receive a historical street view query request, and determine a target location point based on the historical street view query request; a peripheral location point selection unit, configured to determine a location point that is not more than a preset distance from the target location point and records a historical street view image as a first location point; a same orientation selection unit, configured to determine a location point in the first location point as a second location point, the second location point having a recording orientation of a street view image consistent with a recording orientation of a street view image of the target location point as a second location point; and a query request result returning unit, configured to return the historical street view image recorded at the second location point.

In a third aspect, an embodiment of the present disclosure provides an electronic device, the device electronic including: at least one processor; and a memory communicatively connected with the at least one processor, the memory storing instructions executable by the at least one processor, and the instructions, when executed by the at least one processor, causing the at least one processor to implement the method for querying a historical street view according to any embodiment of the first aspect.

In a fourth aspect, an embodiment of the present disclosure provides a non-transitory computer readable storage medium storing computer instructions, the computer instructions being used to cause a computer to implement the method for querying a historical street view according to any embodiment of the first aspect.

In a fifth aspect, an embodiment of the present disclosure provides a computer program product including a computer program, where the computer program, when executed by a processor, implements the method according to the first aspect.

According to the method and apparatus for querying a historical street view, the electronic device, the computer readable storage medium and the computer program product provided by embodiments of the present disclosure, first, a historical street view query request is received, and a target location point is determined based on the historical street view query request; then a location point that is not more than a preset distance from the target location point and records a historical street view image is determined as a first location point; next a location point in the first location point is determined as a second location point, the second location point has a recording orientation of a street view image consistent with a recording orientation of a street view image of the target location point; and finally the historical street view image recorded at the second location point is returned.

Embodiments of the present disclosure sequentially determine whether the distance exceeds the preset distance and whether the orientation is the same to perform twice selection operations on the target location point. The selection operations depend on the acquisition location and acquisition orientation of the recorded street view image. Accordingly, a location point with the highest correlation to the target location point may be quickly and efficiently selected from all recorded location points, and a user-initiated query request may be quickly responded, thereby improving user experience.

It should be understood that the content described in this section is not intended to identify key or important features of embodiments of the present disclosure, nor is it intended to limit the scope of the present disclosure. Other features of the present disclosure will be easily understood by the following description.

### BRIEF DESCRIPTION OF THE DRAWINGS

By reading the detailed description of non-limiting embodiments with reference to the following accompanying drawings, other features, objectives and advantages of the present disclosure will become more apparent.
Fig. 1 is an example system architecture in which embodiments of the present disclosure may be implemented;
Fig. 2 is a flowchart of a method for querying a historical street view provided by an embodiment of the present disclosure;
Fig. 3 is a flowchart of an index establishing method for supporting query of historical street view provided by an embodiment of the present disclosure;
Fig. 4 is a flowchart of another method for querying a historical street view provided by an embodiment of the present disclosure;
Fig. 5 is a first schematic diagram of an embodiment of the present disclosure for a specific application scenario;
Fig. 6 is a second schematic diagram of an embodiment of the present disclosure for a specific application scenario;
Fig. 7 is a third schematic diagram of an embodiment of the present disclosure for a specific application scenario;
Fig. 8 is a schematic structural diagram of an apparatus for querying a historical street view provided by an embodiment of the present disclosure; and
Fig. 9 is a schematic structural diagram of an electronic device for implementing the method for querying a historical street view provided by an embodiment of the present disclosure.

### DETAILED DESCRIPTION OF EMBODIMENTS

The present disclosure will be further described below in detail in combination with the accompanying drawings and embodiments. It should be appreciated that embodiments described herein are merely used for explaining the relevant disclosure, rather than limiting the disclosure. In addition, it should be noted that, for the ease of description, only the parts related to the relevant disclosure are shown in the accompanying drawings.

It should also be noted that some embodiments in the present disclosure and some features in the disclosure may be combined with each other on a non-conflict basis. Features of the present disclosure will be described below in detail with reference to the accompanying drawings and in combination with embodiments.

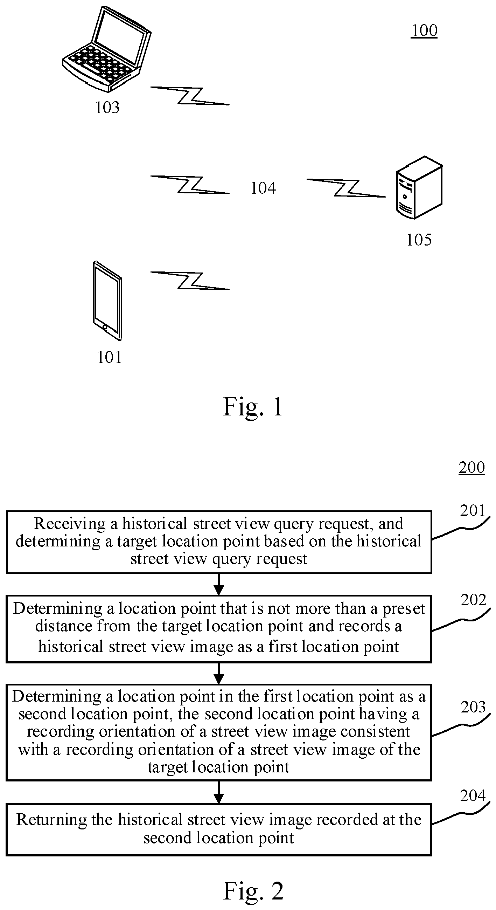

Fig. 1 illustrates an example system architecture 100 in which a method and apparatus for querying a historical street view, an electronic device and a computer readable storage medium of embodiments of the present disclosure may be implemented.

As shown in Fig. 1, the system architecture 100 may include terminal devices 101, 102, 103, a network 104, and a server 105. The network 104 serves as a medium providing a communication link between the terminal devices 101, 102, 103 and the server 105. The network 104 may include various types of connections, such as wired or wireless communication links, or optical fiber cables.

A user may use the terminal devices 101, 102, 103 to interact with the server 105 through the network 104 to receive or send messages, etc. The terminal devices 101, 102, 103 and the server 105 may be installed with various applications for implementing information communication between the terminal devices 101, 102, 103 and the server 105, such as map applications, historical street view image viewing applications, instant messaging applications.

The terminal devices 101, 102, and 103 and the server 105 may be hardware or software. When the terminal devices 101, 102, and 103 are hardware, the terminal devices 101, 102, and 103 may be various electronic devices having display screens, including but not limited to smart phones, tablet computers, laptop portable computers, desktop computers, or the like. When the terminal devices 101, 102, and 103 are software, the terminal devices 101, 102, and 103 may be installed in the electronic devices listed above, or may be implemented as a plurality of pieces of software or software modules, or as a single piece of software or software module, which is not particularly limited herein. When the server 105 is hardware, the server 105 may be implemented as a distributed server cluster composed of a plurality of servers, or may be implemented as a single server. When the server is software, the server may be implemented as a plurality of pieces of software or software modules, or as a single piece of software or software module, which is not particularly limited herein.

The server 105 may provide various services/functions through various built-in applications. Taking a historical street view image viewing application that may provide panoramic time machine service/function as an example, the server 105 may achieve the following effects when running the historical street view image viewing application: first, receiving a historical street view query request from the terminal devices 101, 102, 103 through the network 104, and determining a target location point that a user wants to query based on the historical street view query request; then, determining a location point that is not more than a preset distance from the target location point and records a historical street view image as a first location point; next, determining a location point in the first location point as a second location point, the second location point having a recording orientation of a street view image consistent with a recording orientation of a street view image of the target location point; and finally returning the historical street view image recorded at the second location point to the terminal devices 101, 102, 103 as a query request result. That is, the server 105 determines the query request result corresponding to the historical street view query request initiated by the user through the above processing steps, and returns the result to the initiating user, thereby realizing the panoramic time machine service/function.

It should be noted that the historical street view query request may be acquired in real time from the terminal devices 101, 102, 103 through the network 104, and may also be pre-stored locally in the server 105 in various methods. Therefore, when the server 105 detects that the data are already stored locally (for example, starting to process a to-be-processed historical street view query request saved before), the server may choose to directly acquire the data locally. In this case, the example system architecture 100 may not include the terminal devices 101, 102, 103 and the network 104.

Since the realization of the panoramic time machine function/service requires pre-acquisition of a large number of street view images at various location points and at various time points, an executing body needs to have strong data storage capacity and computing power. Therefore, the method for querying a historical street view provided by embodiments of the present disclosure is generally performed by the server 105 having strong data storage capacity and computing power. Accordingly, an apparatus for querying a historical street view is also generally provided in the server 105. However, it should also be noted that when the terminal devices 101, 102, 103 also have the required computing power and store street view images of some location points, the terminal devices 101, 102, and 103 may also use the historical street view image viewing application installed thereon to complete the above part of the various operations performed by the server 105 to help the server 105 to jointly achieve the ultimate goal, in particularly when there are a plurality of terminal devices having different computing power at the same time.

It should be understood that the numbers of terminal devices, networks, and servers in Fig. 1 are merely illustrative. Depending on the implementation needs, there may be any number of terminal devices, networks, and servers.

With further reference to Fig. 2, Fig. 2 is a flowchart of a method for querying a historical street view provided by an embodiment of the present disclosure. A flow 200 includes the following steps.

Step 201: receiving a historical street view query request, and determining a target location point based on the historical street view query request.

The present step aims to receive the historical street view query request initiated by a user through the terminal device (for example, the terminal devices 101, 102, 103 shown in Fig. 1), and determine the target location point based on the historical street view query request, by an executing body (for example, the server 105 shown in Fig. 1) of the method for querying a historical street view.

The initiated historical street view query request represents that the user wants to acquire a historical street view image of the target location point, so as to view returned street view images of the target location point at various time points in the past. Therefore, the historical street view image request should include at least location information used to determine the target location point. Further, taking into account the complex traffic environment in a city (such as viaducts, above ground and underground, mutually opposite lanes, main/side roads, mountain crossing tunnels), in addition to the location information of the target location point, the historical street view query request may also include orientation information, height information, main/side road distinguishing information, tunnel internal labeling information, etc. according to actual needs, to further select a location point that best matches the target location point from many location points where street view images are recorded, then present the user with a historical street view image that best meets the needs, so as to achieve the purpose of providing the user with a good panoramic time machine function/service use experience.

Step 202: determining a location point that is not more than a preset distance from the target location point and records a historical street view image as a first location point.

On the basis of step 201, the present step aims to select a peripheral location point of the target location point from all the location points by the executing body, that is, the location point that is not more than the preset distance from the target location point and records the historical street view image is determined as the first location point.

Normally, the number of the first location point in the periphery of the target location point determined through the preset distance is greater than 1, therefore, the first location point is actually a general term for the peripheral location point, and may also be understood as a point set of the peripheral location point; in particular, when the target location point is located far away from a city or at the edge of the city, the number of the first location point may be only one, in this regard, the first location point is the only peripheral location point.

Specifically, the preset distance may not only refer to a horizontal distance on the horizontal plane, but may also include a height distance (or height difference) in space, so as to use the height distance to select a location point with approximately the same height as the target location point, in order to better avoid the phenomenon that when the target location point is the uppermost layer of a stacked multi-layer viaduct, the bottommost layer is wrongly judged as a peripheral location point.

It should be understood that the reason why the peripheral location point can be selected in the present step is that the street view images in a database have established a corresponding relationship (or mapping) according to the acquisition location recorded when the street view image is acquired and the location point at the corresponding location. Therefore, the peripheral location point may be determined through a location difference between an actual location of each location point and a target location of the target location point.

Step 203: determining a location point in the first location point as a second location point, the second location point having a recording orientation of a street view image consistent with a recording orientation of a street view image of the target location point.

On the basis of step 202, the present step aims to select a point that is in the same orientation as the target location point from the peripheral location point by the executing body, in other words, the location point, in the first location point, having the recording orientation of the street view image consistent with the recording orientation of the street view image of the target location point is determined as the second location point.

The reason for the second selection of the present step performed on the peripheral location point is that the same location may also obtain completely different street views corresponding to different orientations due to different travel routes and acquisition angles of view of a street view acquisition vehicle. Therefore, in order to provide the user with the historical street view image matching the needs as much as possible, the present step also uses the recording orientation of the street view image of the target location point to perform the second selection on the peripheral location point, to obtain the location point of the same orientation.

In a three-dimensional space, the same orientation does not mean that the orientation is exactly the same, and a certain angular deviation is usually allowable. That is, the orientation within a certain orientation deviation range relative to the recording orientation of the street view image of the target location point may be considered the same orientation as the recording orientation of the street view image of the target location point. Generally, the number of the second location point in the same orientation is greater than 1, so the second location point is actually a general term for the location points in the same orientation, and may also be understood as a point set of the location points in the same orientation. In particular, various factors may also cause the number of the second location point in the same orientation to be 1, that is, in this regard, the second location point is the only existing location point in the same orientation. More particular, in the case there is only one first location point, if the orientation of the first location point is the same as the orientation of the target location point, then the first location point is also the second location point. If the orientation of the first location point is different from the orientation of the target location point, then it indicates that there is no location point with the same orientation as the peripheral location point of the target location point. In this regard, reminder information that there are only location points of different orientations may be reported to the user through a preset path, so as to inform the user of the actual situation.

Step 204: returning the historical street view image recorded at the second location point.

On the basis of step 203, the present step aims to return the historical street view image recorded at the second location point as a query request result to the initiator of the query request by the executing body.

The method for querying a historical street view provided by embodiments of the present disclosure, sequentially determines whether the distance exceeds the preset distance and whether the orientation is the same to perform twice selection operations on the target location point. The selection operations depend on the acquisition location and acquisition orientation of the recorded street view image. Accordingly, a location point with the highest correlation to the target location point may be quickly and efficiently selected from all recorded location points, and a user-initiated query request may be quickly responded, thereby improving user experience.

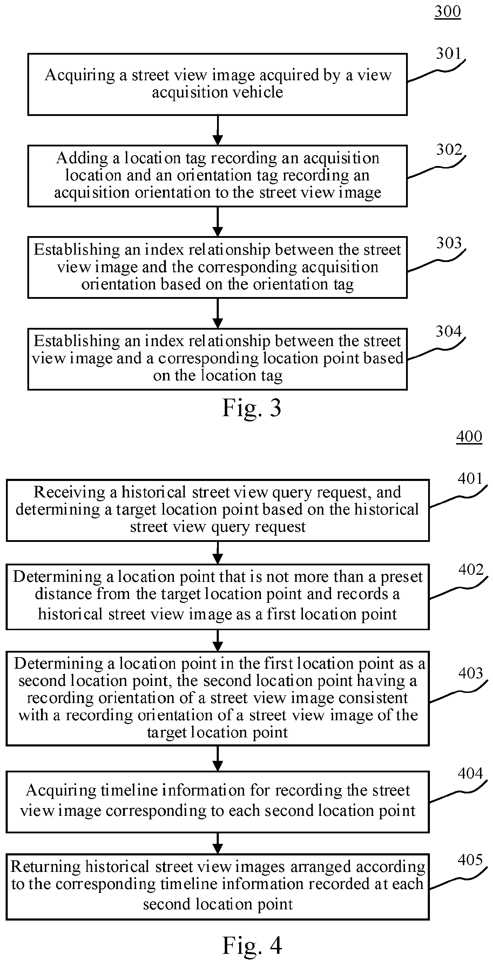

In order to deepen understanding, embodiments of the present disclosure further provide a flowchart of an index establishing method for supporting query of historical street view as provided in Fig. 3, where a flow 300 includes the following steps.

Step 301: acquiring a street view image acquired by a view acquisition vehicle.

Step 302: adding a location tag recording an acquisition location and an orientation tag recording an acquisition orientation to the street view image.

That is, a shooting position and a shooting orientation of the street view image obtained by shooting are added to the corresponding street view image in the form of location tag and orientation tag. For example, the location tag includes "50 meters to the left of Wangfujing Shopping Mall" and "Xi'erqi Subway Station Exit A", which may also be represented in various forms such as geographic location coordinates that may be used to determine the location; and the orientation tag may include "40 degrees towards south", "±10 degrees towards northwest" or the like, which may be used to determine various forms of the acquisition orientation.

Step 303: establishing an index relationship between the street view image and the corresponding acquisition orientation based on the orientation tag.

On the basis of step 302, the present step aims to establish the index relationship between the street view image and the corresponding acquisition orientation based on the orientation tag. For example, for the street view image numbered 001, the orientation tag of its acquisition orientation is "towards the true north". The index relationship may be established as: 001.jpg-towards the true north, that is, the image numbered 001 may be retrieved by its number and the orientation is "towards the true north". Or, all images of "towards the true north" may be retrieved to find the image numbered 001.

Step 304: establishing an index relationship between the street view image and a corresponding location point based on the location tag.

On the basis of step 302, the present step aims to establish the index relationship between the street view image and the corresponding location point based on the location tag. For example, for the street view image numbered 001, the location tag of its acquisition location is "Xi'erqi Subway Station Exit A". The index relationship may be established as: 001.jpg-Xi'erqi Subway Station Exit A, that is, the image numbered 001 may be retrieved by its number and the location is "Xi'erqi Subway Station Exit A". Or, all images of "Xi'erqi Subway Station Exit A" may be retrieved to find the image numbered 001.

Based on the establishment of the index relationships through the above steps, fast retrieval based on the target location point using the established indexes and tags may be achieved, that is, after the target location point is determined from the historical street view query request, the index relationship established in step 304 may be used to retrieve all location tags added with "Xi'erqi Subway Station Exit A" and an image number of another location tag located in the periphery of "Xi'erqi Subway Station Exit A", to determine the peripheral location point. Then, the orientation tag corresponding to the image number is retrieved using the index relationship established in step 303, to determine the location point in the same orientation as the target location point. Finally, the purpose of returning the street view image recorded at the location point in the periphery and in same orientation to the user is achieved.

With further reference to Fig. 4, Fig. 4 is a flowchart of another method for querying a historical street view provided by an embodiment of the present disclosure. A flow 400 includes the following steps.

Step 401: receiving a historical street view query request, and determining a target location point based on the historical street view query request.

Step 402: determining a location point that is not more than a preset distance from the target location point and records a historical street view image as a first location point.

Considering the complex environment of a city, in order to better determine the peripheral location point of the target location point, an embodiment of the present disclosure also provides a peripheral location point selection method that combines not only a horizontal location distance, but also a space height distance of the target location point, so as to be better targeted for scenarios such as a certain layer of a stacked viaduct, subway and underground. A specific implementation may be: determining an actual horizontal location and an actual height of the target location point based on the historical street view query request; determining a location point on a horizontal plane that is not more than a first preset distance from the actual horizontal location and records the historical street view image as a horizontal peripheral location point; and determining a location point where a difference between a height of the location point and the actual height does not exceed a second preset distance in the horizontal peripheral location point as the first location point.

Step 403: determining a location point in the first location point as a second location point, the second location point having a recording orientation of a street view image consistent with a recording orientation of a street view image of the target location point.

The above steps 401-403 are the same as the steps 201-203 shown in Fig. 2. For the same part of content, please refer to the corresponding part of the previous embodiment, and detailed description thereof will be omitted.

Step 404: acquiring timeline information for recording the street view image corresponding to each second location point.

Considering that the time of street view images recorded at different location points may not be the same, for example, a total of 5 time points of street view images are recorded at location point A, which are May 1, 2014, May 1, 2015, May 1, 2016, May 1, 2017 and May 1, 2018 respectively, but only 3 time points of street view images are recorded at location point B, which are October 1, 2014, August 1, 2016, and March 1, 2019 respectively. That is, the timelines of historical street view images recorded at different location points may be different.

In view of the above situation, in order to better match the actual needs of the user, the present step aims to acquire the timeline information for recording the street view image corresponding to each second location point by the executing body. Specifically, the timeline information may be obtained in a variety of methods. For example, the location point may be used as an index to query a time tag recording acquisition time added to each corresponding street view image (an index relationship between the time tag and the street view image is similar to the index relationship between the location tag and the orientation tag with the street view image in the embodiment shown in Fig. 3), and time tags are arranged according to the time axis to form the timeline. Other arranging methods that may represent the time sequence may also be used to form the timeline.

Step 405: returning historical street view images arranged according to the corresponding timeline information recorded at each second location point.

On the basis of step 404, the present step aims to return the historical street view images arranged according to the corresponding timeline information recorded at each second location point by the executing body, so that the user may select for each second location point whether the point meets its own needs based on the received historical street view images arranged according to the corresponding timeline information.

In some other embodiments of the present disclosure, the executing body may also receive selection information including a target timeline returned by the user, and determine the second location point having a timeline being the target timeline as a preferred location point based on the selection information, and finally return the historical street view images arranged according to the timeline information recorded at the preferred location point to the user.

Further, if the target timeline selection information is included in the historical street view query request at the beginning, the executing body may also directly return the historical street view images recorded at the corresponding location point based on the target timeline selection information in step 405, and the step of selecting by the user again is omitted.

Different from the embodiment as shown in Fig. 2, the present embodiment also provides steps 404 and 405, on the basis of determining whether the location point belong to the peripheral location point and whether the location point is in the same orientation as the target location point, timeline classification is also performed on the location point in the periphery of the target location point and in the same orientation as the target location point. The recorded timeline information is used to further satisfy the user's request for viewing city changes in a certain period that may be put forward.

On the basis of any of the above embodiments, considering that most of the street view images are acquired by map and navigation companies regularly by arranging view acquisition vehicles, it is inevitable that there is a lack of details of edge areas or complex scenarios. Therefore, in order to be more comprehensive and provide better effects, street view images shoot by mass users themselves may also be introduced, which improves the effects while mobilizing the enthusiasm of the users. An implementation including but not limited to: receiving a selfie street view image uploaded by a user; receiving location information, orientation information, and time information added by the user to the selfie street view image; and supplementing the corresponding selfie street view image into a street view image database, based on the location information, the orientation information, and the time information added by the user, and adding a user upload label to the selfie street view image.

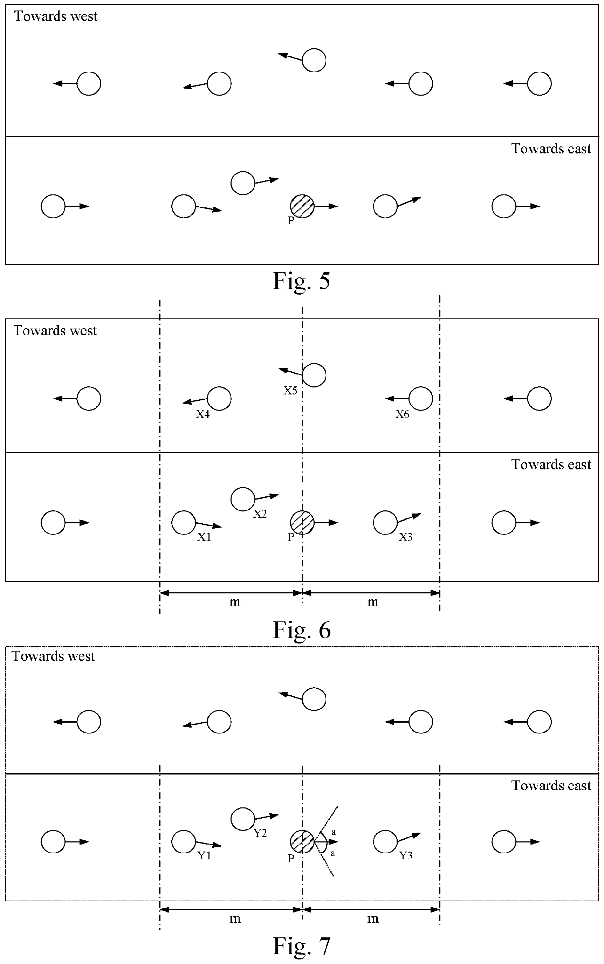

In order to deepen understanding, embodiments of the present disclosure further combine a specific application scenario to give a specific implementation solution, referring to the schematic flowcharts shown in Figs. 5, 6, and 7 in sequence.
1) A server receives a historical street view query request sent by user A.
2) The server determines a target location point as point P based on the received historical street view query request, and preliminarily determines an area where point P is located with recorded location points, as shown in the schematic diagram of Fig. 5.
3) The server uses point P as the center, determines the location points that are not more than m (unit: meter) away from P as peripheral location points, and obtains a peripheral location point set X, which is {XI, X2, X3, X4, X5, X6}, that is, there are 6 peripheral location points, please refer to Fig. 6 for the schematic diagram.
4) The server determines from the historical street view query request that the acquisition orientation of point P is "towards east", and compares whether the acquisition orientation of each peripheral location point in the peripheral location point set X is consistent with the acquisition orientation of point P. The orientation within ±a degrees towards east may be considered to be the same as the acquisition orientation of point P. Therefore, X4, X5, X6 in the peripheral location point set X that are inconsistent with the acquisition orientation of point P are removed, and a peripheral location point set Y having the same orientation as the acquisition orientation of point P is obtained. The point set is {Y1, Y2, Y3}, please refer to Fig. 7 for the schematic diagram.
5) The server determines from the historical street view query request that a historical change period that user A wants to query is from 2014 to 2016, and accordingly acquires the timeline of each location point of Y1, Y2, Y3 from the peripheral location point set Y having the same orientation as the acquisition orientation of point P. In addition, by comparison, it is confirmed that the location point Y2 of the timeline 2013-2016 best meets the needs of user A. Therefore, street view images shoot and obtained in 2013, 2014, 2015, and 2016 respectively at the location recorded on the Y2 location point are used as a result and returned to user A.

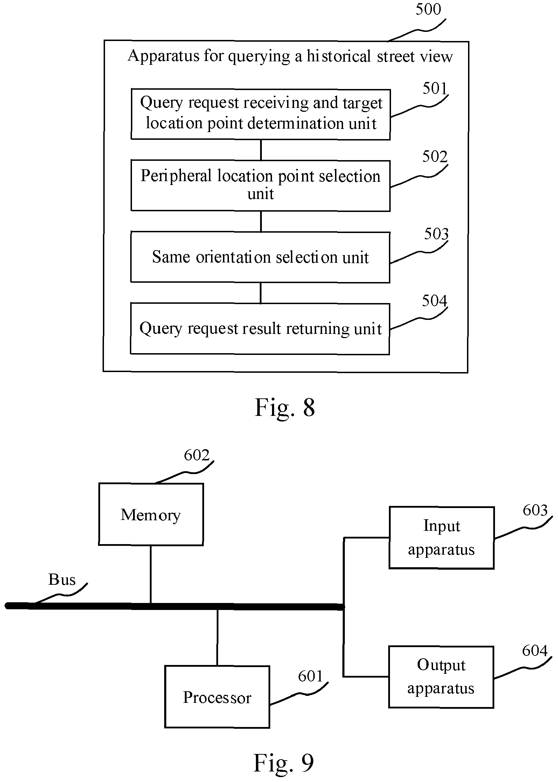

With further reference to Fig. 8, as an implementation of the method shown in the above figures, an embodiment of the present disclosure provides an apparatus for querying a historical street view, and the apparatus embodiment corresponds to the method embodiment as shown in Fig. 2. The apparatus may be specifically applied to various electronic devices.

As shown in Fig. 8, an apparatus 500 for querying a historical street view of the present embodiment may include: a query request receiving and target location point determination unit 501, a peripheral location point selection unit 502, a same orientation selection unit 503 and a query request result returning unit 504. The query request receiving and target location point determination unit 501 is configured to receive a historical street view query request, and determine a target location point based on the historical street view query request. The peripheral location point selection unit 502 is configured to determine a location point that is not more than a preset distance from the target location point and records a historical street view image as a first location point. The same orientation selection unit 503 is configured to determine a location point in the first location point as a second location point, the second location point having a recording orientation of a street view image consistent with a recording orientation of a street view image of the target location point. The query request result returning unit 504 is configured to return the historical street view image recorded at the second location point.

In the present embodiment, in the apparatus 500 for querying a historical street view, for the specific processing and the technical effects of the query request receiving and target location point determination unit 501, the peripheral location point selection unit 502, the same orientation selection unit 503 and the query request result returning unit 504, reference may be made to the relevant descriptions of steps 201-204 in the corresponding embodiment of Fig. 2 respectively, and detailed description thereof will be omitted.

In some alternative implementations of the present embodiment, the apparatus 500 for querying a historical street view may further include: a street view image acquisition unit, configured to acquire a street view image acquired by a view acquisition vehicle; a location tag and orientation tag adding unit, configured to add a location tag recording an acquisition location and an orientation tag recording an acquisition orientation to the street view image; a first index relationship establishing unit, configured to establish an index relationship between the street view image and the corresponding acquisition orientation based on the orientation tag; and a second index relationship establishing unit, configured to establish an index relationship between the street view image and a corresponding location point based on the location tag, so as to determine the historical street view image corresponding to the location point and the acquisition orientation corresponding to the historical street view image based on the established index relationships.

In some alternative implementations of the present embodiment, the apparatus 500 for querying a historical street view may further include: a timeline information acquisition unit, configured to acquire, in response to at least two second location points recording street view images on different timelines respectively, timeline information for recording a street view image corresponding to each of the second location points; and the query request result returning unit is further configured to: return historical street view images arranged according to the corresponding timeline information recorded at each of the second location points.

In some alternative implementations of the present embodiment, the apparatus 500 for querying a historical street view may further include: a selection information receiving unit, configured to receive incoming selection information including a target timeline, after returning historical street view images arranged according to the corresponding timeline information recorded at each of the second location points; a preferred location point determination unit, configured to determine the second location point having a timeline being the target timeline as a preferred location point; and a preferred historical street view image returning unit, configured to return the historical street view images arranged according to the timeline information recorded at the preferred location point.

In some alternative implementations of the present embodiment, the peripheral location point selection unit 502 may be further configured to: determine an actual horizontal location and an actual height of the target location point based on the historical street view query request; determine a location point on a horizontal plane that is not more than a first preset distance from the actual horizontal location and records the historical street view image as a horizontal peripheral location point; and determine a location point where a difference between a height of the location point and the actual height does not exceed a second preset distance in the horizontal peripheral location point as the first location point.

In some alternative implementations of the present embodiment, the apparatus 500 for querying a historical street view may further include: a selfie street view image receiving unit, configured to receive a selfie street view image uploaded by a user; a parameter receiving unit, configured to receive location information, orientation information, and time information added by the user to the selfie street view image; and a street view image database supplement and label adding unit, configured to supplement the corresponding selfie street view image into a street view image database, based on the location information, the orientation information, and the time information added by the user, and add a user upload label to the selfie street view image.

The present embodiment exists as the apparatus embodiment corresponding to the foregoing method embodiment. The apparatus for querying a historical street view provided by embodiments of the present disclosure, sequentially determine whether the distance exceeds the preset distance and whether the orientation is the same to perform twice selection operations on the target location point. The selection operations depend on the acquisition location and acquisition orientation of the recorded street view image. Accordingly, a location point with the highest correlation to the target location point may be quickly and efficiently selected from all recorded location points, and a user-initiated query request may be quickly responded, thereby improving user experience.

According to an embodiment of the present disclosure, the present disclosure further provides an electronic device and a computer readable storage medium.

Fig. 9 shows a block diagram of an electronic device for implementing the method for querying a historical street view according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 9, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations, for example, as a server array, a set of blade servers, or a multi-processor system. In Fig. 9, one processor 601 is used as an example.

The memory 602 is a non-transitory computer readable storage medium provided by embodiments of the present disclosure. The memory stores instructions executable by at least one processor, so that the at least one processor performs the method for querying a historical street view provided by embodiments of the present disclosure. The non-transitory computer readable storage medium of embodiments of the present disclosure stores computer instructions for causing a computer to perform the method for querying a historical street view provided by embodiments of the present disclosure.

The memory 602, as a non-transitory computer readable storage medium, may be used to store non-transitory software programs, non-transitory computer executable programs and modules, such as program instructions/modules (for example, the query request receiving and target location point determination unit 501, the peripheral location point selection unit 502, the same orientation selection unit 503 and the query request result returning unit 504 as shown in Fig. 8) corresponding to the method for querying a historical street view in embodiments of the present disclosure. The processor 601 executes the non-transitory software programs, instructions, and modules stored in the memory 602 to execute various functional applications and data processing of the server, that is, to implement the method for querying a historical street view in the foregoing method embodiments.

The memory 602 may include a storage program area and a storage data area, where the storage program area may store an operating system and an application program required by at least one function; and the storage data area may store data created by the electronic device for performing the method for querying a historical street view. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device suitable for performing the method for querying a historical street view through a network. Examples of the above network include but are not limited to the Internet, intranet, local area network, mobile communication network, and combinations thereof.

The electronic device for performing the method for querying a historical street view may further include: an input apparatus 603 and an output apparatus 604. The processor 601, the memory 602, the input apparatus 603, and the output apparatus 604 may be connected through the bus or in other methods. In Fig. 9, connection through the bus is used as an example.

The input apparatus 603 may receive input digital or character information, and generate key signal inputs related to user settings and function control of the electronic device for performing the method for verifying accuracy of a judgment result, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various implementations of the systems and techniques described herein may be implemented in a digital electronic circuit system, an integrated circuit system, an application specific integrated circuit (ASIC), computer hardware, firmware, software, and/or combinations thereof. These various implementations may include the implementation in one or more computer programs. The one or more computer programs may be executed and/or interpreted on a programmable system including at least one programmable processor, and the programmable processor may be a dedicated or general-purpose programmable processor, may receive data and instructions from a storage system, at least one input apparatus and at least one output apparatus, and transmit the data and the instructions to the storage system, the at least one input apparatus and the at least one output apparatus.

These computing programs, also referred to as programs, software, software applications or codes, include a machine instruction of the programmable processor, and may be implemented using a high-level procedural and/or an object-oriented programming language, and/or an assembly/machine language. As used herein, the terms "machine readable medium" and "computer readable medium" refer to any computer program product, device and/or apparatus (e.g., a magnetic disk, an optical disk, a storage device and a programmable logic device (PLD)) used to provide a machine instruction and/or data to the programmable processor, and include a machine readable medium that receives the machine instruction as a machine readable signal. The term "machine readable signal" refers to any signal used to provide the machine instruction and/or data to the programmable processor.

To provide an interaction with a user, the systems and techniques described here may be implemented on a computer having a display apparatus (e.g., a cathode ray tube (CRT)) or an LCD monitor) for displaying information to the user, and a keyboard and a pointing apparatus (e.g., a mouse or a track ball) by which the user may provide the input to the computer. Other kinds of apparatuses may also be used to provide the interaction with the user. For example, a feedback provided to the user may be any form of sensory feedback (e.g., a visual feedback, an auditory feedback, or a tactile feedback); and an input from the user may be received in any form, including acoustic, speech, or tactile input.

The systems and techniques described here may be implemented in a computing system (e.g., as a data server) that includes a backend part, implemented in a computing system (e.g., an application server) that includes a middleware part, implemented in a computing system (e.g., a user computer having a graphical user interface or a Web browser through which the user may interact with an implementation of the systems and techniques described here) that includes a frontend part, or implemented in a computing system that includes any combination of the backend part, the middleware part or the frontend part. The parts of the system may be interconnected by any form or medium of digital data communication (e.g., a communication network). Examples of the communication network include a local area network (LAN), a wide area network (WAN) and Internet.

The computer system may include a client and a server. The client and the server are generally remote from each other and typically interact through the communication network. The relationship between the client and the server is generated through computer programs running on the respective computers and having a client-server relationship to each other.

According to an embodiment of the present disclosure, the present disclosure further provides a computer program product including a computer program, where the computer program, when executed by a processor, implements the method for querying a historical street view.

The technical solution of embodiments of the present disclosure sequentially determine whether the distance exceeds the preset distance and whether the orientation is the same to perform twice selection operations on the target location point. The selection operations depend on the acquisition location and acquisition orientation of the recorded street view image. Accordingly, a location point with the highest correlation to the target location point may be quickly and efficiently selected from all recorded location points, and a user-initiated query request may be quickly responded, thereby improving user experience.

It should be understood that the various forms of processes shown above may be used to resort, add or delete steps. For example, the steps described in embodiments of the present disclosure may be performed in parallel, sequentially, or in a different order. As long as the desired result of the technical solution disclosed in embodiments of the present disclosure can be achieved, no limitation is made herein.

Embodiments do not constitute a limitation to the scope of protection of the present disclosure. It should be appreciated by those skilled in the art that various modifications, combinations, sub-combinations and substitutions may be made depending on design requirements and other factors. Any modifications, equivalents and replacements, and improvements falling within the spirit and the principle of embodiments of the present disclosure should be included within the scope of protection of the present disclosure.

## Claims

1. A method for querying a historical street view, the method comprising:
receiving (201, 401) a historical street view query request, and determining a target location point based on the historical street view query request;
determining (202, 402) a location point that is not more than a preset distance from the target location point and records a historical street view image as a first location point;
determining (203, 403) a location point in the first location point as a second location point, the second location point having a recording orientation of a street view image consistent with a recording orientation of a street view image of the target location point; and
returning (204) the historical street view image recorded at the second location point.

2. The method according to claim 1, further comprising:
acquiring (301) a street view image acquired by a view acquisition vehicle;
adding (302) a location tag recording an acquisition location and an orientation tag recording an acquisition orientation to the street view image;
establishing (303) an index relationship between the street view image and the corresponding acquisition orientation based on the orientation tag; and
establishing (304) an index relationship between the street view image and a corresponding location point based on the location tag, so as to determine the historical street view image corresponding to the location point and the acquisition orientation corresponding to the historical street view image based on the established index relationships.

3. The method according to claim 1 or 2, further comprising:
acquiring (404), in response to at least two second location points recording street view images on different timelines respectively, timeline information for recording the street view image corresponding to each of the second location points; and
the returning (204) the historical street view image recorded at the second location point, comprises:
returning (405) historical street view images arranged according to the corresponding timeline information recorded at each of the second location points.

4. The method according to claim 3, wherein, after returning (405) the historical street view images arranged according to the corresponding timeline information recorded at each of the second location points, the method further comprises:
receiving incoming selection information including a target timeline;
determining the second location point having a timeline being the target timeline as a preferred location point; and
returning the historical street view images arranged according to the timeline information recorded at the preferred location point.

5. The method according to any one of claims 1-4, wherein the determining (202, 402) the location point that is not more than the preset distance from the target location point and records the historical street view image as the first location point, comprises:
determining an actual horizontal location and an actual height of the target location point based on the historical street view query request;
determining a location point on a horizontal plane that is not more than a first preset distance from the actual horizontal location and records the historical street view image as a horizontal peripheral location point; and
determining a location point where a difference between a height of the location point and the actual height does not exceed a second preset distance in the horizontal peripheral location point as the first location point.

6. The method according to any one of claims 1-5, further comprising:
receiving a selfie street view image uploaded by a user;
receiving location information, orientation information, and time information added by the user to the selfie street view image; and
supplementing the corresponding selfie street view image into a street view image database, based on the location information, the orientation information, and the time information added by the user, and adding a user upload label to the selfie street view image.

7. An apparatus (500) for querying a historical street view, the apparatus (500) comprising:
a query request receiving and target location point determination unit (501), configured to receive a historical street view query request, and determine a target location point based on the historical street view query request;
a peripheral location point selection unit (502), configured to determine a location point that is not more than a preset distance from the target location point and records a historical street view image as a first location point;
a same orientation selection unit (503), configured to determine a location point in the first location point as a second location point, the second location point having a recording orientation of a street view image consistent with a recording orientation of a street view image of the target location point as a second location point; and
a query request result returning unit (504), configured to return the historical street view image recorded at the second location point.

8. The apparatus according to claim 7, further comprising:
a street view image acquisition unit, configured to acquire a street view image acquired by a view acquisition vehicle;
a location tag and orientation tag adding unit, configured to add a location tag recording an acquisition location and an orientation tag recording an acquisition orientation to the street view image;
a first index relationship establishing unit, configured to establish an index relationship between the street view image and the corresponding acquisition orientation based on the orientation tag; and
a second index relationship establishing unit, configured to establish an index relationship between the street view image and a corresponding location point based on the location tag, so as to determine the historical street view image corresponding to the location point and the acquisition orientation corresponding to the historical street view image based on the established index relationships.

9. The apparatus according to claim 7 or 8, further comprising:
a timeline information acquisition unit, configured to acquire, in response to at least two second location points recording street view images on different timelines respectively, timeline information for recording the street view image corresponding to each of the second location points; and
the query request result returning unit (504) is further configured to:
return historical street view images arranged according to the corresponding timeline information recorded at each of the second location points.

10. The apparatus according to claim 9, further comprising:
a selection information receiving unit, configured to receive incoming selection information including a target timeline, after returning historical street view images arranged according to the corresponding timeline information recorded at each of the second location points;
a preferred location point determination unit, configured to determine the second location point having a timeline being the target timeline as a preferred location point; and
a preferred historical street view image returning unit, configured to return the historical street view images arranged according to the timeline information recorded at the preferred location point.

11. The apparatus according to any one of claims 7-10, wherein the peripheral location point selection unit (502) is further configured to:
determine an actual horizontal location and an actual height of the target location point based on the historical street view query request;
determine a location point on a horizontal plane that is not more than a first preset distance from the actual horizontal location and records the historical street view image as a horizontal peripheral location point; and
determine a location point where a difference between a height of the location point and the actual height does not exceed a second preset distance in the horizontal peripheral location point as the first location point.

12. The apparatus according to any one of claims 7-11, further comprising:
a selfie street view image receiving unit, configured to receive a selfie street view image uploaded by a user;
a parameter receiving unit, configured to receive location information, orientation information, and time information added by the user to the selfie street view image; and
a street view image database supplement and label adding unit, configured to supplement the corresponding selfie street view image into a street view image database, based on the location information, the orientation information, and the time information added by the user, and add a user upload label to the selfie street view image.

13. An electronic device, comprising:
at least one processor (601); and
a memory (602) communicatively connected with the at least one processor (601);
the memory storing instructions executable by the at least one processor (601), and the instructions, when executed by the at least one processor (601), causing the at least one processor (601) to perform the method according to any one of claims 1-6.

14. A non-transitory computer readable storage medium (602) storing computer instructions, the computer instructions being used to cause a computer to perform the method according to any one of claims 1-6.

15. A computer program product comprising a computer program, the computer program, when executed by a processor (601), implementing the method according to any one of claims 1-6.
